# FASCICULE DE BREVET EUROPEEN

(11) **EP 1 390 217 B1**
(45) Date de publication et mention de la délivrance du brevet: **14.03.2007**
(21) Numéro de dépôt: 02740808.7
(22) Date de dépôt: 24.05.2002
(51) Int. Cl.: B60C 23/04

(54) **ENSEMBLE A ROUE EQUIPE D'UN CAPTEUR DE PRESSION**
FAHRZEUGRADANORDNUNG MIT EINEM DRUCKSENSOR
WHEEL ARRANGEMENT HAVING A PRESSURE SENSOR

(30) Priorité: 31.05.2001 FR 0107182
(43) Date de publication de la demande: 25.02.2004
(73) Titulaire: MESSIER-BUGATTI, 78140 Velizy Villacoublay (FR)
(72) Inventeur: PRADIER, Jean-Clair, F-78800 Houilles (FR); GAUTIER, Antoine, F-92210 Saint Cloud (FR)
(74) Mandataire: Blot, Philippe Robert Emile
(86) Numéro de dépôt international: PCT/FR2002/001758
(87) Numéro de publication internationale: WO 2002/096681

(56) Documents cités:
- FR-A- 2 665 417
- US-A- 5 033 295

## Description

La présente invention concerne un ensemble à roue, du type comportant :
- une roue dotée d'une jante adaptée pour recevoir un pneumatique, la roue portant un capteur de mesure de la pression dans le pneumatique ;
- une fusée autour de laquelle la roue est montée rotative par l'intermédiaire de paliers ; et
- des moyens de communication entre le capteur et des moyens, associés à la fusée, d'exploitation des mesures effectuées par le capteur.

Dans les avions, il est utile de connaître, depuis la cabine de pilotage, la pression des pneumatiques des roues du train d'atterrissage.

A cet effet, il est connu de monter, sur la jante de la roue, un capteur de pression adapté pour mesurer la pression de gonflage du pneumatique porté sur la jante. Ce capteur de pression adresse la valeur de la mesure effectuée à une unité de traitement d'informations disposée sur la partie fixe du train d'atterrissage ou dans le corps de l'avion.

Ainsi, il est nécessaire de prévoir des moyens de communication d'informations entre les parties fixes et les parties mobiles du train d'atterrissage.

En particulier, il est connu de disposer sur le moyeu de la roue et sur la fusée de roue, autour de laquelle le moyeu est monté rotatif, deux bobinages concentriques constituant ensemble un transformateur. Le bobinage porté par le moyeu est relié au capteur de pression alors que le bobinage porté par la fusée de roue est relié à l'unité de traitement d'informations.

Le signal fourni par le capteur au bobinage porté par le moyeu et correspondant à la valeur de la pression dans le pneumatique induit un signal dans le bobinage porté par la fusée du train d'atterrissage. Ce signal est analysé par l'unité de traitement d'informations afin d'en déduire la pression dans le pneumatique.

La fréquence du signal circulant dans les bobinages du transformateur est d'environ 3 kHz. Pour assurer une transmission d'informations satisfaisante entre les deux bobinages, l'écartement radial entre les bobinages concentriques doit être aussi réduite que possible. Cet écartement est par exemple de l'ordre de 0,3 mm. En tout état de cause, cet écartement doit être inférieur à 1 mm.

Pour assurer un tel écartement, suivant toute la circonférence des bobinages, il convient que les deux bobinages comportent des moyens propres de guidage en rotation, tels que deux roulements à billes.

Un tel agencement est décrit, par exemple, dans le document FR-2.665.417.

Dans cet agencement, l'ensemble à roue comporte, d'une part, deux roulements à billes assurant la rotation de la roue autour de la fusée de roue et, d'autre part, deux autres roulements à billes supplémentaires permettant un positionnement radial satisfaisant des deux bobinages l'un par rapport à l'autre.

La présence des roulements à billes supplémentaires assurant le centrage des deux bobinages augmente considérablement la complexité de l'ensemble à roue et rend difficile l'agencement d'un dispositif auxiliaire, tel qu'un dispositif de suivi de la rotation de la roue à l'intérieur de la fusée de roue.

L'invention a pour but d'apporter une solution à ce problème en proposant un ensemble à roue qui soit mécaniquement simple et permette notamment de loger facilement un dispositif auxiliaire à l'intérieur de la fusée de roue tout en permettant de transmettre une information entre la roue et la partie fixe supportant la roue par un agencement fiable et peu encombrant.

A cet effet, l'invention a pour objet un ensemble à roue du type précité, caractérisé en ce que lesdits moyens de communication sont adaptés pour une transmission radiofréquence à une fréquence supérieure à 50 kHz et comportent une antenne tournante portée par la roue et une antenne fixe portée par la fusée, les deux antennes étant dépourvues de moyens propres de guidage en rotation, et en ce que l'antenne tournante et l'antenne fixe sont généralement annulaires et disposées, dans un même plan, de manière concentrique, autour de l'axe de rotation de la roue, l'écartement radial moyen entre l'antenne tournante et l'antenne fixe étant supérieur à 2 mm.

Suivant des modes particuliers de réalisation, l'ensemble à roue comporte l'une ou plusieurs des caractéristiques suivantes :
- l'écartement radial moyen entre l'antenne tournante et l'antenne fixe est sensiblement égal à 5 mm ;
- l'antenne fixe s'étend autour de l'antenne tournante ;
- il comporte un dispositif auxiliaire disposé à l'intérieur de la fusée de roue ;
- le dispositif auxiliaire comporte un élément rotatif et il comporte des moyens de liaison en rotation dudit élément rotatif et de la roue, lesquels moyens s'étendent généralement suivant l'axe de rotation de la roue, au travers de l'antenne tournante et de l'antenne fixe ;
- lesdits moyens de liaison en rotation comportent un noyau tournant solidaire de la roue et engagé au travers de la fusée, et l'antenne tournante est portée par ledit noyau tournant et en est solidaire en rotation ;
- lesdits moyens de liaison comportent un mécanisme d'accouplement en rotation de la roue et de l'élément rotatif du dispositif auxiliaire, lesquels moyens d'accouplement sont adaptés pour compenser un éventuel décalage axial entre la roue et l'élément rotatif ; et
- ledit dispositif auxiliaire comporte un tachymètre.

L'invention sera mieux comprise à la lecture de la description qui va suivre, donnée uniquement à titre d'exemple et faite en se référant à la figure unique qui est une vue en coupe longitudinale d'un ensemble à roue selon l'invention, le pneumatique n'ayant pas été représenté.

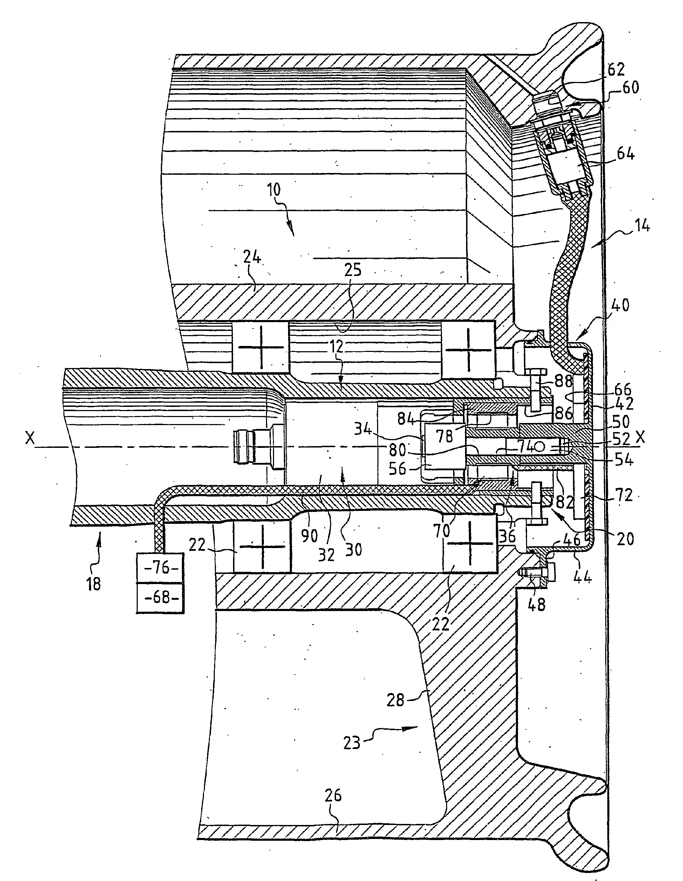

L'ensemble à roue 10 représenté sur la figure 1 fait partie du train d'atterrissage d'un avion. Il comporte une fusée 12 de train d'atterrissage constituant une partie fixe et une roue 14 montée rotative autour de l'axe X-X de la fusée.

La fusée 12 présente un corps creux 16 de forme générale tubulaire d'axe X-X. Le corps 16 est relié à une extrémité 18 au reste de la structure du train d'atterrissage. L'autre extrémité, notée 20, du corps 16 forme une extrémité libre de la fusée.

La roue 14 est montée rotative autour de la fusée 12 par l'intermédiaire de deux roulements à rouleaux 22 espacés suivant l'axe de la fusée.

La roue 14 comporte une jante 23 sur laquelle est monté un pneumatique non représenté. La jante 23 comporte un moyeu 24 traversé de part en part par un passage 25 dans lequel s'étendent la fusée 12 et les deux roulements 22.

La jante 23 comporte en outre une couronne extérieure 26 de support du pneumatique. Le moyeu 24 et la couronne 26 sont reliés l'un à l'autre par des bras radiaux 28 séparés les uns des autres par des ouies de ventilation.

A l'intérieur de la fusée 12 est disposé un dispositif auxiliaire 30. Ce dispositif 30 est, par exemple, un tachymètre destiné au suivi de la rotation de la roue. Ce dispositif comporte un corps 32 solidaire de la fusée 12 et une partie 34 mobile en rotation par rapport au corps. Cette partie mobile est solidaire en rotation de la roue 14 par une chaîne mécanique 36 de liaison qui s'étend axialement au travers de l'extrémité libre 40 de la fusée.

La chaîne de liaison 36 comporte, par exemple, une coupelle 40 formant capot rapportée sur la jante 23 suivant l'axe de celle-ci. La coupelle 40 présente un fond 42 entouré d'une paroi latérale 44 généralement cylindrique. Cette dernière présente, à son extrémité ouverte, une collerette périphérique extérieure 46 permettant la liaison de la coupelle 40 à la jante 23, par l'intermédiaire de vis 48.

L'axe de la coupelle 40 s'étend généralement suivant l'axe X-X de rotation de la roue. La coupelle 40 comporte une douille axiale 50 tournée vers la fusée. Cette douille présente un trou cannelé 52 propre à recevoir une tige cannelée 54 s'étendant suivant l'axe X-X. L'extrémité libre de la tige cannelée 54 est adaptée pour être reliée à la partie mobile 34 du dispositif 30 de suivi de rotation de la roue, par l'intermédiaire d'un mécanisme 56 de couplage en rotation adapté pour compenser un éventuel décalage axial entre l'axe de rotation de la partie mobile 34 du tachymètre et l'axe de rotation de la roue 14, de la coupelle 40 et de la tige cannelée 54.

Ce mécanisme 56 est constitué par exemple d'un tampon en caoutchouc solidarisé d'une part à la partie mobile 34 et d'autre part à la tige filetée 54.

Un capteur de pression 60 est monté sur la roue. A cet effet, et comme connu en soi, la couronne 26 de la roue est munie d'un logement 62 dans lequel est reçue une sonde de pression 64 adaptée pour mesurer la pression à l'intérieur du pneumatique de la roue. Le capteur 60 comporte en outre un module 66 de traitement du signal et de pilotage de la sonde. Ce module est relié à la sonde 64.

Le module 66 est formé sur un circuit imprimé solidarisé au fond de la coupelle 40 autour de la douille 50.

Une unité de traitement d'informations 68 est solidarisée à la partie fixe du train d'atterrissage ou au corps de l'avion. Elle est adaptée pour l'exploitation et notamment l'affichage des mesures de pression effectuées par le capteur 60.

Le capteur 60 et l'unité de traitement d'informations 68 sont reliés l'un à l'autre par des moyens de communication désignés par la référence générale 70. Ces moyens de communication sont adaptés pour établir une transmission radiofréquence, c'est-à-dire par voie hertzienne entre le capteur 60 et l'unité de traitement d'informations 68. Cette transmission est bidirectionnelle, c'est-à-dire que chaque entité peut adresser et recevoir des informations.

Ces moyens de communication sont adaptés pour transmettre par voie hertzienne l'énergie électrique nécessaire au fonctionnement du capteur 60.

Plus précisément, les moyens de communication 70 comportent une unité 72 de modulation/démodulation du signal portée par la roue 14. Cette unité propre à la mise en forme du signal est reliée, d'une part, au module 66 de traitement du capteur 60, et, d'autre part, à une antenne tournante 74 solidaire de la roue.

L'unité 72 de modulation/démodulation est formée sur le même circuit imprimé porté par la coupelle 40 que le module de traitement 66 du capteur;

De manière analogue, les moyens de communication 70 comportent une unité 76 de modulation/démodulation du signal portée par la fusée 12 et reliée à l'unité de traitement d'informations 68. Cette unité 76 est reliée à une antenne fixe 78 portée par la fusée 12.

Les antennes 74 et 78 sont adaptées pour permettre une émission et une réception de signaux en radiofréquence. Ces signaux ont avantageusement une fréquence supérieure à 50 kHz et de préférence comprise entre 125 kHz et 2,2 GHz.

Les antennes 74 et 78 sont disposées en regard de manière à établir une communication hertzienne entre les parties mobile et fixe de l'ensemble à roue.

Selon l'invention, et comme illustré sur la figure, l'antenne tournante 74 et l'antenne fixe 78 sont généralement annulaires d'axe X-X. Elles sont disposées de manière concentrique autour de l'axe X-X et sont disposées dans un même plan transversal à l'axe X-X.

L'antenne tournante 74 est ménagée sur un manchon de support 80 engagé autour de la tige filetée 54. Le manchon 80 est solidarisé en rotation avec la coupelle 40 et la jante 23. A cet effet, la tige de vis 54 comprime axialement le manchon de support 80 contre la douille 50.

L'antenne 74 est formée par exemple d'un conducteur définissant une hélice à la surface du manchon de support 80, les spires de l'hélice étant disjointes. Le conducteur est formé par exemple d'une bande de circuit imprimé.

Un conducteur blindé 82 assure la liaison de l'antenne tournante 74 au circuit imprimé définissant l'unité 72 de modulation/démodulation.

L'antenne fixe 78 est disposée autour de l'antenne tournante 74. L'antenne 78 est portée par la surface intérieure d'une bague de support 84. La bague 84 présente un collet de liaison 86 assurant la solidarisation axiale et en rotation de la bague au corps de la fusée 12 par l'intermédiaire de vis 88.

Comme l'antenne tournante 74, l'antenne fixe 78 est formée d'un conducteur enroulé en hélice à spires non jointives, ce conducteur étant porté par la bague 84.

L'antenne 88 est reliée à l'unité 76 de modulation/démodulation par un conducteur blindé 90 s'étendant le long du corps du tachymètre 30.

L'écartement radial moyen entre les antennes 74 et 78 est supérieur à 2 mm et est, par exemple, sensiblement égal à 5 mm.

Cet écartement est adapté pour permettre une compensation des éventuels décalages axiaux entre l'axe de rotation de la tige 54 portant l'antenne 74 et l'axe de la fusée 12. Ainsi tout risque de choc entre les deux antennes 74 et 78 est évité même en l'absence de moyen propre de guidage en rotation des deux antennes l'une par rapport à l'autre.

Pour effectuer une mesure de pression, l'unité de traitement d'informations 68 commande l'unité 76 pour qu'elle émette un signal module depuis l'antenne fixe 78 vers l'antenne tournante 74. Ce signal véhicule des informations permettant la commande du capteur 60. Ce signal transmet également l'énergie nécessaire à l'alimentation de l'unité 72 et du capteur 60.

La fréquence élevée du signal permet une transmission de l'information malgré l'écartement relativement grand entre les deux antennes.

Le signal reçu par l'antenne tournante 74 est démodulé par l'unité 72 et est adressé au capteur 60. Sous la commande du module 66, le capteur envoie en retour à l'unité de modulation/démodulation 72 le résultat de la mesure faite par la sonde 64. Le signal mis en forme par cette unité 72 est alors émis par l'antenne tournante 74 et recueilli par l'antenne fixe 78. Le signal recueilli est adressé à l'unité de traitement d'informations 68 pour son exploitation.

On conçoit que l'utilisation de moyens de communication radiofréquence réduit l'encombrement général de l'ensemble à roue. De plus, la disposition concentrique des antennes complémentaires permet, dans un encombrement réduit, d'obtenir un rapprochement optimal des antennes. L'absence de moyens de centrage propres aux antennes rend possible la coexistence dans la fusée du tachymètre et des deux antennes. L'antenne tournante 74 étant portée par la chaîne mécanique 36 de liaison en rotation de la roue 14 du tachymètre 30, la présence de l'antenne ne complexifie pas l'agencement du moyeu.

De plus, les antennes étant disposées en arrière de la coupelle 40, celles-ci sont protégées des agressions mécaniques et des perturbations électromagnétiques environnantes.

Enfin, les deux antennes étant invariantes par rotation et disposées coaxialement suivant l'axe de rotation de la roue, celles-ci sont toujours dirigées l'une vers l'autre en offrant constamment les mêmes surfaces en regard. Ainsi, la qualité de la transmission n'est pas modifiée par la rotation de la roue.

On conçoit que l'agencement décrit ici permet d'assurer une transmission entre un capteur de pression et une unité fixe d'exploitation des résultats, tout en permettant une compensation des tolérances de fabrication et de montage des différentes parties de l'ensemble à roue. En effet, les deux antennes complémentaires, du fait de leur espacement relativement important, rendu possible par la fréquence de transmission élevée, peuvent être disposées sur les éléments mécaniques propres à assurer l'entraînement du dispositif auxiliaire.

En variante, le dispositif auxiliaire placé dans la fusée n'est pas un tachymètre mais est constitué d'un ventilateur de frein.

## Revendications

1. Ensemble à roue (10) comportant :
- une roue (14) dotée d'une jante (23) adaptée pour recevoir un pneumatique, la roue (14) portant un capteur (60) de mesure de la pression dans le pneumatique ;
- une fusée (12) autour de laquelle la roue (14) est montée rotative par l'intermédiaire de paliers (22) ; et
- des moyens (70) de communication entre le capteur (60) et des moyens (86), associés à la fusée, d'exploitation des mesures effectuées par le capteur (60),
**caractérisé en ce que** lesdits moyens de communication (70) sont adaptés pour une transmission radiofréquence à une fréquence supérieure à 50 kHz et comportent une antenne tournante (74) portée par la roue (14) et une antenne fixe (78) portée par la fusée (12), les deux antennes (74, 78) étant dépourvues de moyens propres de guidage en rotation, et **en ce que** l'antenne tournante (74) et l'antenne fixe (78) sont généralement annulaires et disposées, dans un même plan, de manière concentrique, autour de l'axe (X-X) de rotation de la roue (14), l'écartement radial moyen entre l'antenne tournante (74) et l'antenne fixe (78) étant supérieur à 2 mm.

2. Ensemble à roue selon la revendication 1, **caractérisé en ce que** l'écartement radial moyen entre l'antenne tournante (74) et l'antenne fixe (78) est sensiblement égal à 5 mm.

3. Ensemble à roue selon la revendication 1 ou 2, **caractérisé en ce que** l'antenne fixe (78) s'étend autour de l'antenne tournante (74).

4. Ensemble à roue selon l'une quelconque des revendications précédentes, **caractérisé en ce qu'**il comporte un dispositif auxiliaire (30) disposé à l'intérieur de la fusée de roue.

5. Ensemble à roue selon la revendication 4, **caractérisé en ce que** le dispositif auxiliaire (30) comporte un élément rotatif (34) et **en ce qu'**il comporte des moyens (36) de liaison en rotation dudit élément rotatif (34) et de la roue (14), lesquels moyens s'étendent généralement suivant l'axe de rotation de la roue, au travers de l'antenne tournante (74) et de l'antenne fixe (78).

6. Ensemble à roue selon la revendication 5, **caractérisé en ce que** lesdits moyens (36) de liaison en rotation comportent un noyau tournant (50, 54, 80) solidaire de la roue (14) et engagé au travers de la fusée (12), et **en ce que** l'antenne tournante (74) est portée par ledit noyau tournant (50, 54, 80) et en est solidaire en rotation.

7. Ensemble à roue selon la revendication 5 ou 6, **caractérisé en ce que** lesdits moyens (36) de liaison comportent un mécanisme (56) d'accouplement en rotation de la roue et de l'élément rotatif (34) du dispositif auxiliaire (32), lesquels moyens d'accouplement sont adaptés pour compenser un éventuel décalage axial entre la roue (14) et l'élément rotatif (34).

8. Ensemble à roue selon l'une quelconque des revendications 4 à 7, **caractérisé en ce que** ledit dispositif auxiliaire comporte un tachymètre (32).

## Claims

1. Wheel assembly (10) comprising:
- a wheel (14) having a rim (23) adapted to receive a tyre, the wheel (14) carrying a sensor (60) for measuring the pressure in the tyre;
- an axle (12) about which the wheel (14) is mounted to be rotatable via bearings (22); and
- means (70) for communication between the sensor (60) and means (86), associated with the axle, for implementing the measurements made by the sensor (60),
**characterised in that** the said communication means (70) are adapted to radiofrequency transmission at a frequency above 50 kHz and comprise a rotating antenna (74) carried by the wheel (14) and a fixed antenna (78) carried by the axle (12), the two antennae (74, 78) being without any rotational guide means of their own, and **in that** the rotating antenna (74) and the fixed antenna (78) are generally annular and are arranged concentrically, in the same plane, about the rotation axis (X-X) of the wheel (14), the mean radial spacing between the rotating antenna (74) and the fixed antenna (78) being greater than 2 mm.

2. Wheel assembly according to claim 1, **characterised in that** the mean radial spacing between the rotating antenna (74) and the fixed antenna (78) is substantially equal to 5 mm.

3. Wheel assembly according to claim 1 or 2, **characterised in that** the fixed antenna (78) extends around the rotating antenna (74).

4. Wheel assembly according to any one of the preceding claims, **characterised in that** it comprises an auxiliary device (30) arranged inside the wheel axle.

5. Wheel assembly according to claim 4, **characterised in that** the auxiliary device (30) comprises a rotary element (34) and **in that** it comprises means (36) for connecting said rotary element (34) and the wheel (14) in rotation, said means generally extending along the rotation axis of the wheel, through the rotating antenna (74) and the fixed antenna (78).

6. Wheel assembly according to claim 5, **characterised in that** said means (36) for rotational connection comprise a rotating hub (50, 54, 80) which is fixedly attached to the wheel (14) and passes through the axle (12), and **in that** the rotating antenna (74) is carried by said rotating hub (50, 54, 80) and is connected for rotation therewith.

7. Wheel assembly according to claim 5 or 6, **characterised in that** said connecting means (36) comprise a mechanism (56) for coupling the wheel and the rotary element (34) of the auxiliary device (32) in rotation, said coupling means being adapted to compensate any axial offset between the wheel (14) and the rotary element (34).

8. Wheel assembly according to any one of claims 4 to 7, **characterised in that** said auxiliary device comprises a tachymeter (32).

## Patentansprüche

1. Radeinheit (10), umfasssend:
- ein Rad (14), das mit einer Felge (23) versehen ist, die dafür ausgelegt ist, einen Reifen aufzunehmen, wobei das Rad (14) einen Fühler (60) zum Messen des Drucks im Reifen trägt;
- einen Achsschenkel (12), auf dem das Rad (14) über Lager (22) drehbar montiert ist; und
- Verbindungsmittel (70) zwischen dem Fühler (60) und dem Achsschenkel zugeordneten Mitteln (86) zur Auswertung der von dem Fühler (60) vorgenommen Messungen,
**dadurch gekennzeichnet, dass** die Verbindungsmittel für eine Funkübertragung mit einer Frequenz über 50 kHz ausgelegt sind und eine von dem Rad (14) getragene rotierende Antenne (74) und eine von dem Achsschenkel (12) getragene feststehende Antenne (78) umfassen, wobei die beiden Antennen (74, 78) frei von eigenen Drehführungsmitteln sind, und dass die rotierende Antenne (74) und die feststehende Antenne (78) allgemein ringförmig und in einer gemeinsamen Ebene konzentrisch um die Drehachse (X-X) des Rads (14) herum angeordnet sind, wobei der mittlere radiale Abstand zwischen der rotierenden Antenne (74) und der feststehenden Antenne (78) größer als 2 mm ist.

2. Radeinheit nach Anspruch 1, **dadurch gekennzeichnet, dass** der mittlere radiale Abstand zwischen der rotierenden Antenne (74) und der feststehenden Antenne (78) im Wesentlichen gleich 5 mm ist.

3. Radeinheit nach Anspruch 1 oder 2, **dadurch gekennzeichnet, dass** die feststehende Antenne (78) sich um die rotierende Antenne (74) herum erstreckt.

4. Radeinheit nach einem der vorhergehenden Ansprüche, **dadurch gekennzeichnet, dass** sie eine Zusatzvorrichtung (30) umfasst, die im Inneren des Radachsschenkels angeordnet ist.

5. Radeinheit nach Anspruch 4, **dadurch gekennzeichnet, dass** die Zusatzvorrichtung (30) ein rotierendes Element (34) umfasst und dass sie Mittel (36) zur Verbindung des rotierenden Elements (34) und des Rads (14) bezüglich Drehung umfasst, wobei diese Mittel sich allgemein in der Drehachse des Rads durch die rotierende Antenne (74) und die feststehende Antenne (78) erstrecken.

6. Radeinheit nach Anspruch 5, **dadurch gekennzeichnet, dass** die Mittel (36) zur Verbindung bezüglich Drehung einen rotierenden Kern (50, 54, 80) umfassen, der mit dem Rad (14) fest verbunden ist und in den Achsschenkel (12) eingesteckt ist, und dass die rotierende Antenne (74) von diesem rotierenden Kern (50, 54, 80) getragen ist und mit diesem bezüglich Drehung fest verbunden ist.

7. Radeinheit nach Anspruch 5 oder 6, **dadurch gekennzeichnet, dass** die Verbindungsmittel (36) einen Mechanismus (56) zur Kupplung des Rads und des rotierenden Elements (34) der Zusatzvorrichtung (32) bezüglich Drehung umfassen, wobei diese Kupplungsmittel dafür ausgelegt sind, eine eventuelle axiale Versetzung zwischen dem Rad (14) und dem rotierenden Element (34) zu kompensieren.

8. Radeinheit nach einem der Ansprüche 4 bis 7, **dadurch gekennzeichnet, dass** die Zusatzvorrichtung einen Tachometer (32) umfasst.
